# EUROPEAN PATENT APPLICATION

(11) **EP 4 095 705 A1**
(43) Date of publication of application: **30.11.2022**
(21) Application number: 21176410.5
(22) Date of filing: 28.05.2021
(51) Int. Cl.: G06F 13/38, H04L 12/861, H04L 29/06

(54) **COMMUNICATION NODE FOR DATA NETWORKS AND BUSSES**

(71) Applicant: Cetitec GmbH, 75179 Pforzheim (DE)
(72) Inventor: Kolmanic, Bojan, 75196 Remchingen (DE); Gornik, Stjepan, 10370 Dugo Selo (HR); Modschiedler, Tobias, 76131 Karlsruhe (DE)
(74) Representative: Fink Numrich Patentanwälte PartmbB

(57) **Abstract**

The invention relates to a communication node for a data networks and busses for receiving messages from a physical interface (110) having transmitting and receiving means, by way of which physical interface (110) the communication node (100) is connectable to a communication line of the data network, comprising:
- a communication module (10) for receiving the message and creating a corresponding message object (MO) referencing message data and metadata, the communication module (10) being configured to store the message object (MO) in a memory (20) and to create a message event (ME) upon creating the message object (MO), the message event (ME) containing or being associated with a reference to the message object (MO);
- a tagging and filtering unit (30) configured to retrieve the message object (MO) referenced by its message event (ME) upon receiving the message event (ME) and, if a predefined filter criteria (FC) applied to the message object (MO) is met, configured to derive a tag and to update the message object (MO) in the memory (20) with the determined tag to be a tagged message object (MO); and
- a processing unit (50) being configured to retrieve the tagged message object (MO) from the memory (20) and to process the tagged message object (MO) based on the tag.

## Description

The present invention relates to a communication node for data networks and busses for receiving messages from a physical interface having transmitting and receiving means, by way of which physical interface the communication node is connectable to a communication line of the data network.

In data networks and busses a huge amount of messages have to be filtered and routed by a communication node for further processing. Filtering and routing of message objects created from a respective message is applicable but not limited to different kind of input/output systems, different kind of bus systems (CAN, FlexRay, LIN, and so on) and networks, such as Ethernet. In most systems, each message received by the communication node initiates a software-based process for mapping the created message object to different software objects, such as queues, pipes, consumers (i.e. other system components), providers and so on, thereby using various algorithms for sorting, searching and processing. Current solutions for data reception and processing provide different kinds of filtering methods, but do not provide enough granularity to significantly reduce the number of interrupts in the communication node. Incoming events such as the message objects are not prepared to be processed as fast as possible by software.

It is an object of the present invention to provide a communication node for data networks and busses which is able to reduce unnecessary interrupts and processing time of a processor of the communication node.

This object is solved by a communication node according to the features of present claim 1. Preferred embodiments are set out in the dependent claims.

The present invention refers to a communication node for data networks and busses for receiving message objects from a physical interface having transmitting and receiving means, by way of which physical interface the communication node is connectable to a communication line of the data network. The communication node comprises a communication module, a tagging and filtering unit, a processing unit. Optionally, the communication node may comprise more than one communication modules. In this case, the communication modules may be of the same type or may be different with respect to the data network or the bus they are linked to.

The term "data networks" generally refers to a collection of computers interconnected by a single technology. The term "busses" as used in this description generally refers to a shared communication link which uses one set of wires to connect multiple subsystems.

The communication module is adapted to receive the message and provide a corresponding message object referencing message data and metadata, the communication module being configured to store the message object in a memory and to create a message event upon creating the message object, the message event containing or being associated with a reference to the message object.

The tagging and filtering unit is configured to retrieve the message object referenced by its message event upon receiving the message event and, if a predefined filter criteria applied to the message object is met, configured to derive a tag and to update the message object in the memory with the determined tag to be a tagged message object.

The processing unit is configured to retrieve the tagged message object from the memory and to process the tagged message object based on the tag.

The processing unit may be configured to process the tagged message object based on the tag without any further software-based filtering and/or mapping by a software running on the processing unit. Alternatively, or additionally, the processing unit may be configured to process the tagged message object based on the tag applying a software-based filtering and/or mapping by a software running on the processing unit. In the present invention, the term filtering is to be understood as an identification of different classes and types of messages. The term mapping is to be understood as establishing a correct software context for message processing.

The communication node enables offloading software solutions running on a processor from filtering and routing of message objects and move these tasks into the hardware-based tagging and filtering unit. To do so, the tagging and filtering unit allows the preparation of message objects in hardware with the configurable tag. As a result, the message objects can be processed directly by software but without any additional software-based mapping. Additionally, routing the tagged message object to other hardware-objects is also possible based on the tag information.

According to a preferred embodiment, the tagging and filtering unit is configured to apply the predetermined filter criteria to the message object or part of it. In other words, the whole message object or predefined parts of the message object may be used as input for the filter criteria.

According to a further preferred embodiment, the predefined filter criteria is configured by software in the memory or a memory (storing, among others, the message objects) of the tagging and filtering unit. By means of the filter criteria control flow interactions between the tagging and filtering unit and other components can be handled. The filter criteria enables to configure which received message objects are processed as relevant, e.g. which sender of message objects provide message objects (input data) to be tagged. The filter criteria further enables to configure which consuming components (receiver of the message object) shall be notified about specific filter matches, i.e. which (external) subsystems consume which tagged message objects.

According to a further preferred embodiment, a predefined filter applying the predefined filter criteria is configured to perform arithmetic and/or logic operations. Alternatively, the predefined filter applying the predefined filter criteria is configured to perform a data comparison by a mask and a value. As a further alternative, the predefined filter applying the predefined filter criteria may be configured as TCAM (ternary content addressable memory).

According to a further preferred embodiment, a respective predefined filter criteria is associated to a specific message event. This enables different handling routines of different received message objects. The message event triggers the tagging and filtering unit to continue processing the message object.

According to a further preferred embodiment, the tagging and filtering unit is configured to retrieve the message object referenced by its message event only in case the message is received from a predetermined communication module in case the communication node comprises a plurality of communication modules. If the message is received from a communication module other than the predetermined communication module, the message object referenced by its message event will not be retrieved by the tagging and filtering unit. Controlling of a desired behaviour may be made via respective configuration.

According to a further preferred embodiment, the tagging and filtering unit is configured to create a match event if the incoming message object produces a filter match. In other words, a component of the tagging and filtering unit called filter/matching logic is adapted to create a match event which may be used to notify another component about newly received message objects. The term "producing a filter match" is to be understood that an information within the message object corresponds to the predefined filter criteria.

According to a further preferred embodiment, the tagging and filtering unit is configured to derive the tag according to a tagging configuration stored in the memory or a memory of the tagging and filtering unit. The tagging configuration associates the match event with a specified tag having a tag value of a constant width, if the predefined filter criteria applied to the message object is met.

Instead of updating the message object in the memory with the determined tag, the determined tag may be stored separately in the memory instead of updating the message object with the tag.

According to a further preferred embodiment, the tagging and filtering unit may be configured to generate a tag event if the predefined filter criteria applied to the message object is met to notify a (receiving) system component and/or an interrupt controller about a filter match.

According to a further preferred embodiment, the system component may be configured to read the message object after having received the tag event. The event handling logic is configured to route the tag event to the system component for direct processing of the message object based on the tag. Similarly, the processing unit may be configured to read the tagged message object upon being triggered by an interrupt controller having received the tag event.

The communication module, the tagging and filtering unit, and the processing unit of the communication node may be implemented as an integrated circuit in the form of a system on a chip.

Summarizing, the tagged message objects can either be used by software without any further or simplified software-based filtering and/or mapping or directly by other hardware units connected to the communication node. In the first alternative, the processing unit could optionally be triggered by an interrupt controller (which may be part of the integrated circuit as well), and then read the tagged message object, i.e. the message object including the tag. The tag may be used directly as an index into a configuration/context array, thereby avoiding searching and mapping in software. In the second alternative, according to which the tagged message objects are used by other hardware units (system components) a direct retransmission of the received message on another bus is possible. For example, a tagged message object may be forwarded to output a CAN message object. Alternatively, the tagged message object may be forwarded to a rewriting engine for further processing in hardware.

The present invention will be explained below more detailed by reference to the accompanying figures.
Figure 1 shows a schematic illustration of a communication node according to the invention.
Figure 2 shows a schematic illustration of an example of applying a filter criteria to an incoming message object.

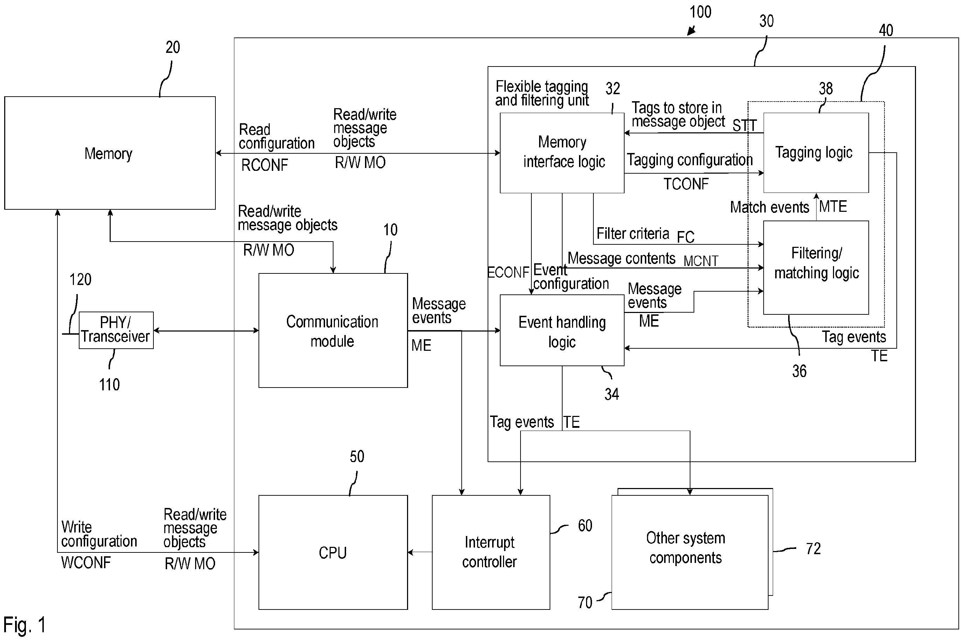

Figure 1 shows a schematic illustration of a communication node 100 according to the invention. The communication node 100 is a communication node for a data network or bus for receiving messages from a physical interface 110. The data network may be a switched or non-switched data network. The physical interface 110 connects the communication node 100 to a communication line 120 of the data network. As known to the person skilled in the art, the physical interface 110 comprises transmitting and receiving means (i.e. a transceiver). The physical interface 110 which is, by way of example only, not an integral part of the communication node 100 is connected to a communication module 10 of the communication node 100. Although the present example shows only one communication module 10, the communication node 100 optionally may comprise a plurality of same or different communication modules 10, each of them being connected to a specific data network or bus.

The communication node 100 comprises, besides the communication module 10, a tagging and filtering unit 30, a processing unit 50 (CPU), an interrupt controller 60 and, optionally, at least one other system component 70, 72. The other system components 70, 72 may be, for example, other communication modules, a rewriting engine, a further interrupt controller, and so on.

The communication node 100 is connected to a memory 20 which is, by way of example only, an external memory with respect to the communication node 100. In an alternative embodiment, the memory 20 might be an integral part of the communication node 100 as well. The memory 20 is a conventional memory configured to store message objects MO received by the physical interface 110. In addition to that the memory 20 contains different kind of configuration data which is used to configure the tagging and filtering unit 30. In particular, the memory 20 may be accessed by reading and/or writing from the communication module 10, the tagging and filtering unit 30 and the processing unit 50.

The tagging and filtering unit 30 consists of a plurality of different components, each of them being implemented as hardware. However, the functionality as described below may be provided by a single hardware unit as well. In the particular embodiment as illustrated in figure 1, the tagging and filtering unit 30 comprises a memory interface logic 32, an event handling logic 34, a filtering/matching logic 36, and a tagging logic 38. The filtering/matching logic 36 and the tagging logic 38 may be provided as a combined filtering/matching and tagging logic 40.

The components of the communication node 100 encircled by the rectangular having a solid line are preferably implemented as an integrated circuit (system on a chip). As illustrated in figure 1, the communication module 10, the components of the tagging and filtering unit 30, the processing unit 50, the interrupt controller 60 and the optional at least one other system component 70, 72 may be implemented in a single hardware as a system on a chip.

Those components of the communication node 100 which communicate with each other and/or external components (i.e. components outside the communication node 100) are interconnected by an arrow. The tip or tips at the end of each arrow indicates or indicate a direction of data transfer.

The communication node 100 as illustrated in figure 1 enables offloading software solutions conventionally running on the node's processing unit 50 from filtering and routing of message objects. These tasks are moved into the hardware-based tagging and filtering unit 30. As will be apparent below, the tagging and filtering unit 30 allows the preparation of the message objects MO in hardware with the configurable tag. As a result, the message objects having a tag attached or associated (hereinafter called a tagged message object) can be processed by the processing unit 50 directly by software without any additional software-based filtering and/or mapping. If necessary, a simplified software-based filtering and/or mapping may be applied. In addition, routing the tagged message object to other hardware-objects such as one or more of the optional other system components 70, 72, is also possible based on the tag's information.

The functional description of the communication node 100 and its tagging and filtering unit 30 will be made below.

As described above, the memory 20 stores the message objects MO created from respective messages received by the physical interface 110 and different types of configuration data which are used to configure the tagging and filtering unit 30. Examples for message objects are: CAN mailbox, CAN FIFO element, Ethernet MAC FIFO element represented by its descriptor, and so on. The configuration data consists of different kinds of filter criteria, tagging configuration data, and event configuration data. The configuration data may comprise further data needed for configuration purposes of the components of the tagging and filtering unit 30.

The memory 20 has a respective communication connection to the communication module 10, the processing unit 50, and the tagging and filtering unit 30, more specifically its memory interface logic 32. The memory 20 may be accessed using the respective communication connection by the communication module 10 for reading and/or writing message objects (R/W MO). The memory 20 may be accessed using the respective communication connection by the processing unit 50 for reading and/or writing message objects (R/W MO) as well as for writing configuration data (WCONF). The memory 20 may be accessed using the respective communication connection by the memory interface logic 32 for reading and/or writing message objects (R/W MO) and for reading configuration data RCONF.

The communication module 10 is configured for receiving a message from the physical interface 110. Upon receiving the message, the communication module 10 creates the above mentioned message object MO. The message object MO references message data (also called message content) and metadata. The communication module 10 is configured to store the message object MO in the memory 20 and to create a message event ME upon creating the message object MO. The message event ME contains or is associated with a reference to the message object MO and is forwarded via a respective communication connection to the event handling logic 34 of the tagging and filtering unit 30 and the interrupt controller 60.

Upon receiving the message event ME, the tagging and filtering unit 30 starts processing the message object MO after having been initially configured with the configuration data being stored in the memory 20. The configuration of the different components of the tagging and filtering unit is made via control of the memory interface logic 32.

The memory interface logic 32 handles all dataflow interactions between the tagging and filtering unit 30 and the memory 20. The memory interface logic 32 reads configuration data (RCONF) for the specific components of the tagging and filtering unit 30, i.e. the event handling logic 34, the filtering/matching logic 36, and the tagging logic 38, from the memory 20. In addition, the memory interface logic 32 reads the message object MO referencing the message data (message content) and metadata as input for the components of the tagging and filtering unit 30. Reading the message object MO is executed after the event handling logic 34 has initiated processing the message event ME. Processing the message event ME and the message content (MCNT) of the message object MO by the filtering/matching logic 36 results in deriving a tag if a predefined filter criteria FC applied to the message object MO is met.

For configuration, event configuration data are provided from the memory interface logic 32 to the event handling logic 34 via a respective communication connection (ECONF). The event configuration data are read by the memory interface logic 32 from the memory 20 (RCONF). The event handling logic 34 is configured with the event configuration data received from the memory interface logic 32, either via memory or hardware registers. The event configuration data contains an information about which received message events ME are relevant, i.e. which of the external subsystems provide input data to be tagged. The event configuration data further contains information about which consuming component shall be notified about specific filter matches, i.e. which of the external subsystems consume tagged message objects.

Being configured, the event handling logic 34 handles control flow interactions between components of the tagging and filtering unit 30 (i.e. the filtering/matching logic 36 or the combined filter/matching and tagging logic 40) and external subsystems, such as the interrupt controller 60 and/or one or more of the other system components 70, 72. Wherever in this description the terms "external components" or "external subsystem" are used, it is to be understood that the component or subsystem is not part of the tagging and filtering unit 30. However, they may be part of the same system on a chip.

In particular, the event handling logic 34 informs the filter/matching logic 36 about new messages by forwarding the message event ME via a respective communication connection. In addition, the event handling logic 34 forwards a tag event TE, via a respective communication connection, to the interrupt controller 60 and/or one of the more optional other system components 70, 72. The tag event TE is received, via a respective communication connection, from the tagging logic 38 or the combined filtering/matching and tagging logic 40 which creates the tag event TE in case the predefined filter criteria FC applied to the message object MO is met.

The filter/matching logic 36 reacts to incoming message events ME. The configuration of the filter/matching logic 36 comprises storing filter criteria FC received from the memory interface logic 32, via a respective communication connection. The filter/matching logic 36 applies the filter criteria FC configured by software in memory. Various types of filters and filter criteria can be used. In particular, the predefined filter applying the predefined filter criteria FC is configured to perform arithmetic and/or logic operations. Alternatively, the predefined filter applying the predefined filter criteria FC is configured to perform a data comparison by a mask and a value. Moreover, the predefined filter applying the predefined filter criteria FC may be implemented as TCAM (ternary content addressable memory).

The filter/matching logic 36 uses the memory interface logic 32 to access the message data (message contents) of the message object MO referenced by the received message event ME (MCNT). The access of the message contents (MCNT) is made via a respective communication connection which might be the same which is used for the filter criteria FC.

The filter/matching logic 36 is configured to apply the predefined filter criteria FC to the message object MO or a part of it. A respective predefined filter criteria FC may be associated to a specific message event ME.

If an incoming message event ME triggering retrieval of the referenced message object MO produces a filter match, a match event MTE is generated by the filtering/matching logic 36 which is forwarded, via a respective communication connection, to the tagging logic 38. Each match event MTE contains or is associated with a reference to the relevant message object MO.

Upon receiving the match event MTE, the tagging logic 38 is triggered to continue processing for this message object MO. In a preparatory step, tagging configuration data is received, via a respective communication connection, from the memory interface logic 32 (TCONF). The tagging configuration data is used for configuring the tagging logic 38.

Generally, the tagging configuration associates match events MTE with a specified tag value of a constant width. Alternatively, the tag could be stored in a separately configured memory instead of the message object MO. More specifically, the tagging logic 38 reacts to match events MTE received from the filter/matching logic 36. The tagging logic 38 is configured to update the message object MO in the memory 20 with the determined tag configured by software in memory such that the memory 20 now comprises a tagged message object MO. The tagging logic 38 uses the memory interface logic 32, via a respective communication connection, to update the message object MO in the memory with the tag (STT). The communication connection may be the same which is used for receiving the tagging configuration data.

In addition, the tagging logic 38 generates, as already described above, the tag event TE to inform the event handling logic 34 about the update of the message object MO, now being a tagged message object.

Referring back to figure 1, in an alternative embodiment, the combined FML and tagging logic 40 and/or one of the other components (memory interface logic 32 and event handling logic 34) could be replaced by a general purpose processing unit. In this case, matching the filter criteria FC and tagging would be part of an executable image running on this general purpose processing unit.

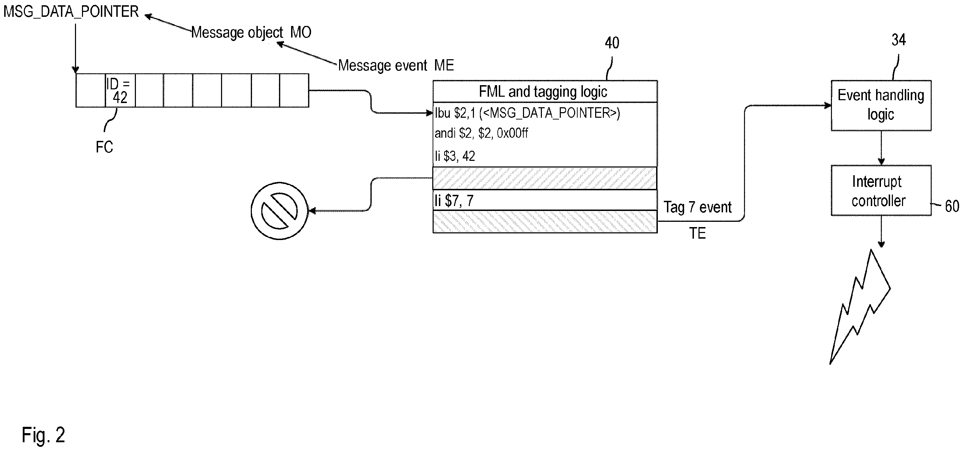

Figure 2 illustrates an example where a predefined filter criteria FC is represented by program code. Figure 2 illustrates the combined filter/matching and tagging logic 40 (hereinafter: FML and tagging logic 40) comprising the functionality of the above-described filtering/matching logic 36 and tagging logic 38 as well as the event handling logic 34 and the interrupt controller 60. As described above, the FML and tagging logic 40 receives the message event ME, triggering the retrieval of the message object MO. The FML and tagging logic 40 loads an identifier ID, in the present example "ID=42", at a specified offset 1 using a message data pointer (MSG_DATA_POINTER) into a register $2:
lbu $2,1 (<MSG_DATA_POINTER>)
andi $2, $2, OxOOff

In the present example, the filter criteria FC equals "42" which is loaded in register $3.
li $3, 42

Then, the information stored in the registers $2 and $3 is compared. If the information does not equal, the routine DROP is selected.
bne $2, $3, DROP

As no filter match is present, the message object MO will not be handled according to the invention, but in a conventional way by notifying the interrupt controller 60 triggering a software-based filtering and/or mapping in the processing unit 50.

If, on the other hand, the information stored in the registers $2 and $3 equals, the routine is continued.
li $7, 7
j PASS

In this case, a filter match has occurred. Hence, the tag event TE being associated with a specified tag value of a constant width, in this example: "7", is sent to the event handling logic 34 for further processing. Additionally, the tag is stored in memory 20 via the memory interface logic 32. The event handling logic 34 notifies the interrupt controller 60, and optionally at least one of the other system components 70, 72 about the filter match.

The tagged message objects which are stored in the memory 20 can either be used by software running on the processing unit 50 or directly by the other system components 70, 72.

For software cases, the processing unit 50 can optionally be triggered by the interrupt controller 60 to read the tagged message object from the memory 20. The tag included in the tagged message object can then be used directly, e.g., as an index into a configuration/context array, thereby avoiding searching in software.

For hardware cases, a direct re-transmission of the received tagged message object on another bus might be used. For example, a tag with a specified tag value triggers forwarding the message object to output CAN message object. Alternatively, tagged message objects can be forwarded to a rewriting engine for further processing in hardware.

The rewriting engine is triggered by the tag event TE from the tagging and filtering unit 30 so that no additional matching is required in the rewriting engine. Based on the tag, a set of rewriting rules can directly be applied to message data of the message object MO. Rewriting rules include, but are not limited to,
- set parts of the message data of a message object MO to a constant value;
- apply a predetermined arithmetic on the message data of the message object MO;
- copy specific memory to the message data of the message object ML

The rewriting engine can in turn generate new events for further processing of the rewritten message.

As a result, the tagging and filtering unit enables offloading software solutions conventionally running on a processor from filtering and/or routing and move these tasks into the hardware-based tagging and filtering unit. This allows the preparation of messages in hardware using a configurable tag so that the messages can be processed directly by software without any additional or simplified software-based mapping. Additionally, routing other hardware objects is also possible based on the information of the tag.

### List of reference signs

- 10: communication module
- 20: memory
- 30: tagging and filtering unit
- 32: memory interface logic
- 34: event handling logic
- 36: filter and matching logic
- 38: tagging logic
- 40: combined filter/matching and tagging logic
- 50: processing unit
- 60: interrupt controller
- 70: system component
- 72: system component
- 100: communication node
- 110: physical interface
- 120: communication line
- MO: message object
- ME: message event
- TE: tag event
- MTE: match event
- FC: filter criteria
- TCONF: tagging configuration
- ECONF: event configuration
- MCNT: message content
- STT: tags to store in message object
- FC: filter criteria
- WCONF: write configuration
- RFONF: read configuration
- R/W MO: read/write message object

## Claims

1. A communication node for data networks and busses for receiving messages from a physical interface (110) having transmitting and receiving means, by way of which physical interface (110) the communication node (100) is connectable to a communication line of the data network, comprising:
- a communication module (10) for receiving the message and providing a corresponding message object (MO) referencing message data and metadata, the communication module (10) being configured to store the message object (MO) in a memory (20) and to create a message event (ME) upon creating the message object (MO), the message event (ME) containing or being associated with a reference to the message object (MO);
- a tagging and filtering unit (30) configured to retrieve the message object (MO) referenced by its message event (ME) upon receiving the message event (ME) and, if a predefined filter criteria (FC) applied to the message object (MO) is met, configured to derive a tag and to update the message object (MO) in the memory (20) with the determined tag to be a tagged message object (MO);
- a processing unit (50) being configured to retrieve the tagged message object (MO) from the memory (20) and to process the tagged message object (MO) based on the tag.

2. The communication node according to claim 1, wherein the processing unit (50) is configured to process the tagged message object (MO) based on the tag without any further software-based filtering and/or mapping by a software running on the processing unit (50).

3. The communication node according to claim 1, wherein the processing unit (50) is configured to process the tagged message object (MO) based on the tag applying a software-based filtering and/or mapping by a software running on the processing unit (50).

4. The communication node according to one of the preceding claims, wherein the tagging and filtering unit (30) is configured to apply the predefined filter criteria (FC) to the message object (MO) or a part of it.

5. The communication node according to one of the preceding claims, wherein the predefined filter criteria (FC) is configured by software in the memory (20) or a memory of the tagging and filtering unit (30).

6. The communication node according to one of the preceding claims, wherein a respective predefined filter criteria (FC) is associated to a specific message event (ME).

7. The communication node according to one of the preceding claims, wherein the message event (ME) triggers the tagging and filtering unit (30) to continue processing the message object (MO).

8. The communication node according to one of the preceding claims, wherein the tagging and filtering unit (30) is configured to derive the tag according to a tagging configuration stored in the memory (20) or a memory of the tagging and filtering unit (30).

9. The communication node according to one of the preceding claims, wherein the tagging and filtering unit (30) is configured to create a match event (MTE) if the incoming message object (MO) produces a filter match.

10. The communication node according to claim 9, wherein the tagging configuration associates the match event (MTE) with a specified tag having a tag value of a constant width, if the predefined filter criteria (FC) applied to the message object (MO) is met.

11. The communication node according to one of the preceding claims, wherein the tag is stored separately in the memory (20) instead of updating the message object (MO) with the tag.

12. The communication node according to one of the preceding claims, wherein the tagging and filtering unit (30) is configured to generate a tag event (TE) if the predefined filter criteria (FC) applied to the message object (MO) is met to notify a system component (70, 72) and/or an interrupt controller (60) about a filter match.

13. The communication node according to claim 12, wherein the system component (70, 72) is configured to read the message object (MO) after having received the tag event (TE).

14. The communication node according to one of the preceding claims, wherein the processing unit (50) is configured to read the tagged message object (MO) upon being triggered by an interrupt controller (60) having received the tag event (TE).

15. The communication node according to one of the preceding claims, wherein at least the communication module (10), the tagging and filtering unit (30), and the processing unit (50) are implemented as an integrated circuit.
